# EUROPÄISCHE PATENTSCHRIFT

(11) **EP 2 069 163 B1**
(45) Veröffentlichungstag und Bekanntmachung des Hinweises auf die Patenterteilung: **16.01.2013**
(21) Anmeldenummer: 07817437.2
(22) Anmeldetag: 20.08.2007
(51) Int. Cl.: B60L 13/06, B60L 13/08

(54) **MAGNETANORDNUNG FÜR MAGNETSCHWEBEFAHRZEUGE UND VERFAHREN ZU IHRER HERSTELLUNG**
MAGNET ARRANGEMENT FOR MAGNETIC LEVITATION VEHICLES AND METHOD FOR THE PRODUCTION THEREOF
SYSTÈME MAGNÉTIQUE POUR VÉHICULES À SUSTENTATION MAGNÉTIQUE

(30) Priorität: 26.09.2006 DE 102006045950
(43) Veröffentlichungstag der Anmeldung: 17.06.2009
(73) Patentinhaber: ThyssenKrupp Transrapid GmbH, 34127 Kassel (DE)
(72) Erfinder: BUGIEL, Peter, 34277 Fuldabrück (DE); PFANNKUCH, Harald, 34590 Wabern (DE); HAHN, Wolfgang, 34125 Kassel (DE); KRÄMER, Joachim, 34289 Zierenberg (DE)
(74) Vertreter: Lorenz, Bernd Ingo Thaddeus
(86) Internationale Anmeldenummer: PCT/DE2007/001506
(87) Internationale Veröffentlichungsnummer: WO 2008/043322

(56) Entgegenhaltungen:
- WO-A-2005/090116
- US-B1- 6 361 268

## Beschreibung

Die Erfindung betrifft eine Magnetanordnung der im Oberbegriff des Anspruchs 1 angegebenen Gattung und ein Verfahren zu ihrer Herstellung.

Eine bekannte Magnetanordnung dieser Art (z. B. DE 10 2004 012 746 A1) weist eine Mehrzahl von Magnetpolen auf, die in Fahrtrichtung eines Magnetschwebefahrzeugs hintereinander angeordnet und an bzw. in einem sog. Magnetrückenkasten befestigt sind. Bei einer Magnetanordnung für Tragmagnete sind z. B. zwölf Magnetpole hintereinander angeordnet, obwohl diese Zahl willkürlich gewählt ist und auch größer oder kleiner sein kann. Jeder Magnetpol besteht aus einem eine Magnetpolfläche definierenden Kern und einer diesen umgebenden Wicklung, die beim Betrieb des Magnetschwebefahrzeugs von einem vorgewählten Strom durchflossen wird. Der Magnetrückenkasten ist seinerseits mit Hilfe von zwei an ihm angreifenden Gestellbügeln über ein Schwebegestell oder sonstwie mit einem Wagenkasten des Magnetschwebefahrzeugs verbunden, wobei die Gestellbügel z. B. am Ort des zweiten und elften Magnetpols am Magnetrückenkasten angreifen.

Die Magnetanordnung hat, wenn sie der Funktion "Tragen" dient, die Aufgabe, das Magnetschwebefahrzeug beim Betrieb an eine am Fahrweg montierte Reaktionsschiene in Form eines Langstators od. dgl. heranzuziehen bzw. zwischen der Reaktionsschiene und den Magnetpolflächen einen Luftspalt von z. B. 10 mm aufrecht zu erhalten, durch den das Magnetschwebefahrzeug in einem Schwebezustand gehalten wird. Zu diesem Zweck grenzen im Schwebezustand einerseits die vorzugsweise ebenen Magnetpolflächen sämtlich an eine gemeinsame, zur ebenen Unterseite der Reaktionsschiene im wesentlichen parallele Referenzfläche, die auch als Luftspaltfläche bezeichnet wird. Andererseits wird der die Wicklungen der Magnetpole durchfließende Strom mit Hilfe von Regelschaltungen und an diese angeschlossenen Spaltsensoren, die an den beiden Enden der Magnetanordnung vorgesehen sind, so geregelt, dass die Größe des Spalts zwischen der Unterseite der Reaktionsschiene und der Referenzfläche im wesentlichen überall konstant ist.

Entsprechende Verhältnisse können sich bei Magnetanordnungen ergeben, die der Funktion "Führen" dienen und z. B. mit Reaktionsschienen in Form von Seitenführschienen zusammenwirken.

Aufgrund der beschriebenen Anordnung wird der Rückenkasten und damit auch die Referenzfläche unter Last längs einer Biegelinie durchgebogen, die in der Mitte der Magnetanordnung die größte Amplitude hat. Das hat zur Folge, dass die Größe des Luftspalts in mittleren Bereichen der Magnetanordnung verringert und die Magnetkraft erhöht wird, während an den Enden der Magnetanordnung umgekehrt eine Vergrößerung des Luftspalts und eine Verringerung der Tragkraft erhalten werden. Dadurch ergeben sich unterschiedliche Luftspaltanteile, was sich ungünstig auf die Betriebseigenschaften der Magnetwicklungen auswirkt, beispielsweise durch einen erhöhten Strombedarf und eine daraus resultierende, größere Erwärmung der Magnetpole.

Das von der Erfindung zu lösende technische Problem besteht daher darin, einerseits die Magnetanordnung der eingangs bezeichneten Gattung so auszubilden, dass die von den Magnetpolen gebildete Referenzfläche zumindest unter Nennlast im wesentlichen keine Krümmung aufweist, sondern eine Ebene bildet, und andererseits ein vergleichsweise einfach durchzuführendes Verfahren zur Herstellung einer solchen Magnetanordnung anzugeben.

Zur Lösung dieses Problems dienen die kennzeichnenden Merkmale der Ansprüche 1 und 7.

Erfindungsgemäß besitzt die Magnetanordnung bzw. die durch ihre Magnetpole definierte Referenzfläche im unbelasteten Zustand eine solche inverse Krümmung, dass sie bei Nennlast im wesentlichen zu einer Ebene gebogen wird. Dadurch ist es möglich, beim Betrieb des Magnetschwebefahrzeugs längs der gesamten Magnetanordnung eine im wesentlichen konstante Luftspaltgröße und damit gleiche Magnetkräfte zu erzielen. Außerdem ermöglicht das erfindungsgemäße Verfahren einen besonders einfachen Zusammenbau der Magnetpole mit dem Magnetrückenkasten. Dabei ist gleichgültig, ob die Magnetanordnung der Funktion "Tragen" oder der Funktion "Führen" dienen soll.

Weitere vorteilhafte Merkmale der Erfindung ergeben sich aus den Unteransprüchen.

Die Erfindung wird nachfolgend in Verbindung mit den beiliegenden Zeichnungen und in unterschiedlichen Maßstäben an einem Ausführungsbeispiel näher erläutert. Es zeigen:
Fig. 1 eine schematische und perspektivische Darstellung eines bekannten, zwei Magnetanordnungen aufweisenden Moduls eines Magnetschwebefahrzeugs;
Fig. 2 eine perspektivische Ansicht eines Kerns eines einzelnen Magnetpols der Magnetanordnung nach Fig. 1;
Fig. 3 eine der Fig. 2 entsprechende Ansicht des Kerns nach dem Anbringen einer Polwange an dem Kern;
Fig. 4 einen kompletten, den Kern nach Fig. 2 und 3 aufweisenden Magnetpol der Magnetanordnung nach Fig. 1 und einen zu dessen Montage dienenden Magnetrückenkasten;
Fig. 5 einen Schnitt längs der Linie V-V der Fig. 4;
Fig. 6 und 7 schematische Querschnitte durch einen Magnetrückenkasten und einen auf diesem zu montierenden, in einer Vorderansicht dargestellten Magnetpol in zwei unterschiedlichen Stellungen während der Montage;
Fig. 8 eine Seitenansicht des Magnetpols nach Fig. 4;
Fig. 9 einen vergrößerten Schnitt längs der Linie A-A der Fig. 8;
Fig. 10 in einer schematischen Seitenansicht und in einer auseinandergezogenen Darstellung einen Magnetrückenkasten, eine Mehrzahl von Magnetpolen und zu deren Montage bestimmte Ausrüstungsteile;
Fig. 11 die Teile nach Fig. 10 in einen gefügten Zustand; und
Fig. 12 eine Vorderansicht der Anordnung nach Fig. 11.

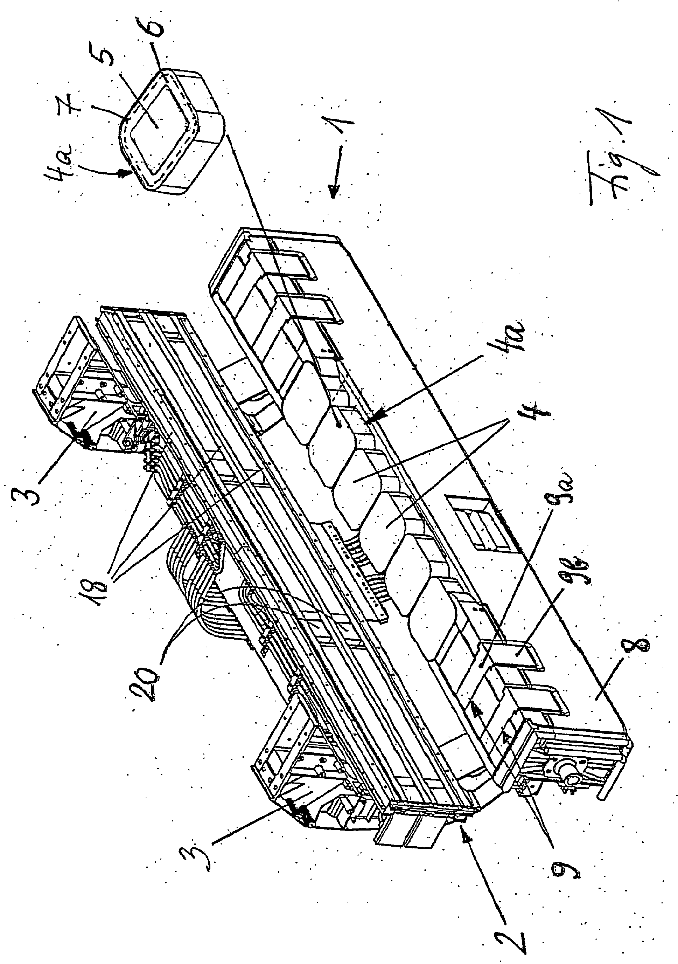

Fig. 1 zeigt schematisch einen bei Magnetschwebefahrzeugen verwendeten Modul mit einer ersten Magnetanordnung 1 in Form eines Tragmagneten und mit einer zweiten Magnetanordnung 2 in Form eines Führmagneten. Der Modul ist an Gestellbügeln 3 befestigt, die in bekannter Weise mit einem Schwebegestell od. dgl. eines Wagenkastens des Magnetschwebefahrzeugs verbunden sind.

Die Magnetanordnung 1 für die Funktion "Tragen" enthält im Ausführungsbeispiel zwölf hintereinander angeordnete Magnetpole 4 mit Kernen 5 und elektrisch in Reihe geschalteten Wicklungen 6, wie in Fig. 1 für einen Magnetpol 4a vergrößert dargestellt ist. Die Magnetpole 4 sind normalerweise rundum von einer z. B. aus Epoxidharz bestehenden Korrosionsschutzschicht 7 umgeben. Die Kerne 5 sind untereinander durch in Fig. 1 nicht sichtbare Polrücken miteinander und durch ebenfalls nicht sichtbare Polwangen mit einem Magnetrückenkasten 8 fest verbunden.

Zur Regelung des Stromflusses durch die Wicklungen 6 derart, dass die Größe eines Luftspalts zwischen den Magnetpolen 4 und einer nicht gezeigten Reaktionsschiene, z. B. einem Langstator, während des Betriebs des Magnetschwebefahrzeugs konstant bleibt, dient wenigstens ein Sensor 9 mit einem Sensorkopf 9a und einem Elektronik-Baustein 9b. Der Sensorkopf 9a dient zur Ermittlung des Istwerts der Luftspaltgröße, während der mit ihm verbundene Elektronik-Baustein 9b im wesentlichen zur Erzeugung, Aufbereitung und/oder Auswertung von Sensorsignalen bestimmte Schaltungen aufweist und an einen Regler angeschlossen ist, der dazu dient, den Strom durch die Wicklungen 6 so zu regeln, dass die Spaltgröße einen vorgewählten Sollwert annimmt und beibehält.

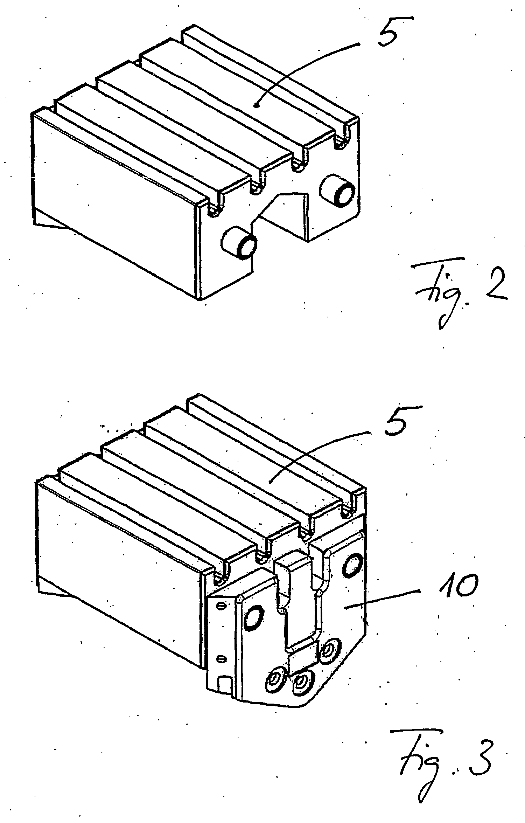

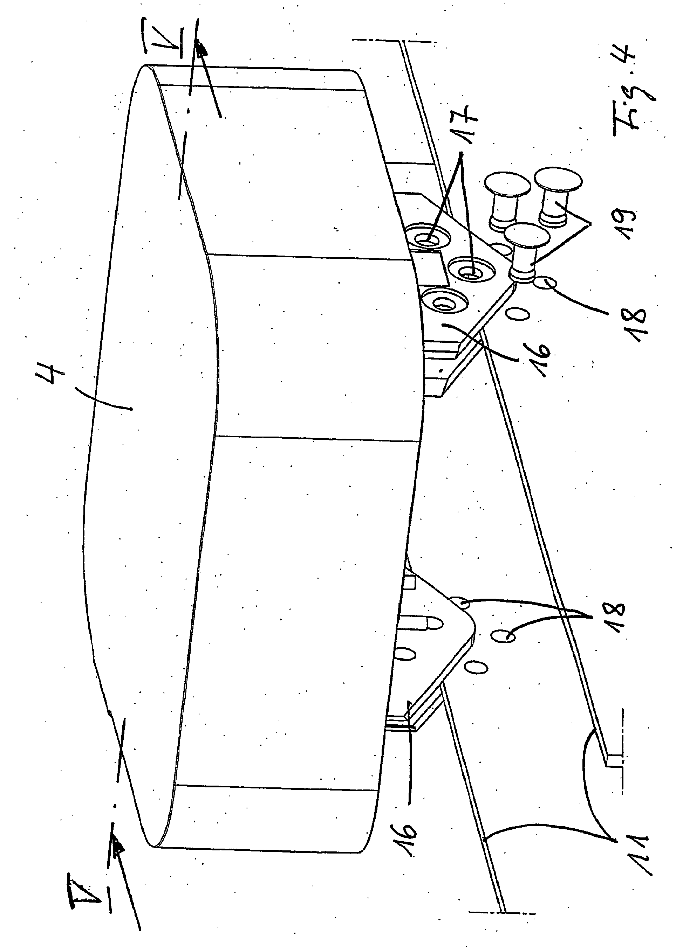

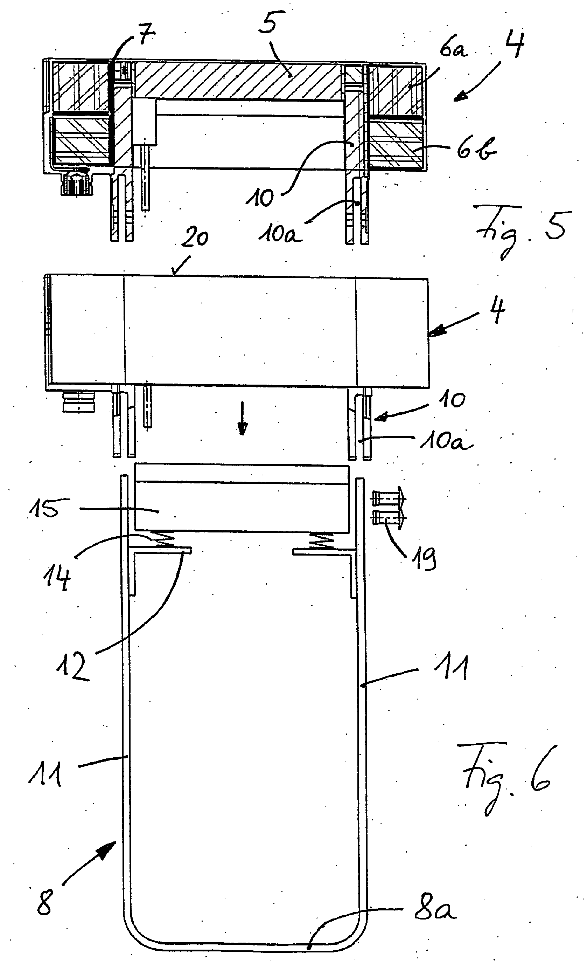

Die Kerne 5 (Fig. 1 bis 3) sind in an sich bekannter Weise ausgebildet und hergestellt (z. B. DE 197 03 497 A1) und an wenigstens einer Seite mit einer zu ihrer Befestigung am Magnetrückenkasten 8 bestimmten Polwange 10 versehen. Vorzugsweise ist sowohl auf der Vorderseite als auch auf der Rückseite der Kerne 5 je eine Polwange 10 angebracht. Im fertigen, mit der Korrosionsschutzschicht 7 versehenen Zustand hat ein mit dem Kern 5 versehener Magnetpol das Aussehen nach Fig. 4 und 5, wobei in Fig. 5 angedeutet ist, dass die Wicklung 6 vorzugsweise aus zwei Scheiben 6a und 6b besteht (z. B. DE 10 2004 011 940 A1). Außerdem ist aus Fig. 4 und 5 ersichtlich, dass die Polwangen 10 nur mit Ansätzen nach unten über die Kerne 5 vorstehen und diese Ansätze jeweils mit Nuten 10a versehen sind. Weitere, aus Fig. 2 bis 5 ersichtliche Einzelheiten der Magnetpole 4 sind für die vorliegende Erfindung nicht wesentlich, so dass auf ihre Beschreibung verzichtet wird.

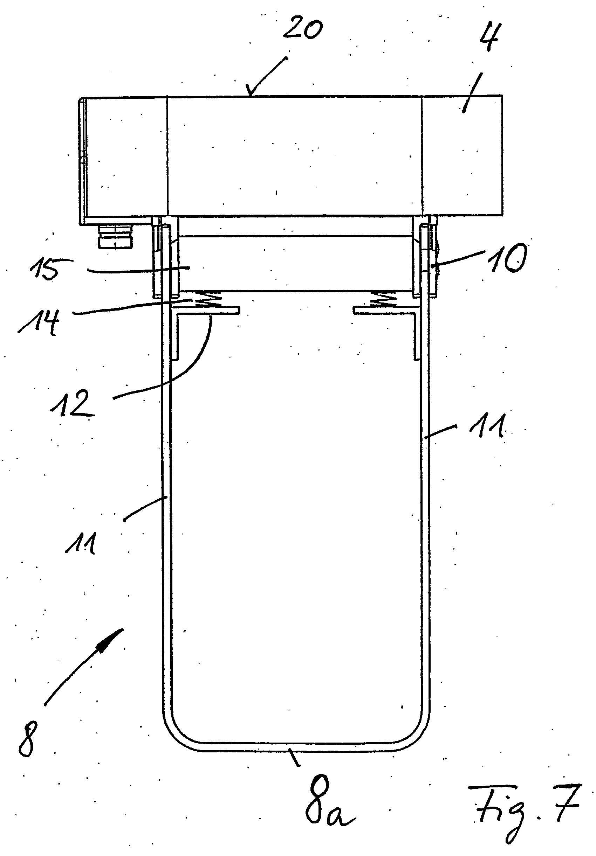

Fig. 6 und 7 zeigen, dass der Magnetrückenkasten 8 üblicherweise U-förmig ausgebildet ist und einen Boden 8a und zwei senkrecht von diesem aufragende Wände 11 aufweist. Die Wände 11 sind in einem vom Boden 8a entfernten Bereich mit je einer nach innen ragenden Halterung 12 versehen. Diese Halterungen 12 dienen zur Abstützung von Federn 14, die ihrerseits zur federnden Abstützung von Polrücken 15 dienen, die die einzelnen Magnetpole 4 an ihren Unterseiten magnetisch miteinander verbinden und zwischen den beiden Wänden 11 zu liegen kommen.

Die Nuten 10a der Polwangen 10 besitzen eine Breite, die im wesentlichen der Dicke der Wände 11 des Magnetrückenkastens 8 entspricht, während die beiden Polwangen 10 jedes Kerns 5 um ein im wesentlichen dem Abstand der Seitenwände 11 entsprechendes Maß voneinander beabstandet sind. Wird daher ein Magnetpol 4, wie
Fig. 6 zeigt, von oben her in Richtung des eingezeichneten Pfeils dem nach oben offenen, U-förmigen Magnetrückenkasten 8 angenähert, dann treten die Oberkanten der Wände 11 in die Nuten 10a der Polwangen 10 eines zugeordneten Paars von Polwangen 10 ein (Fig. 7).

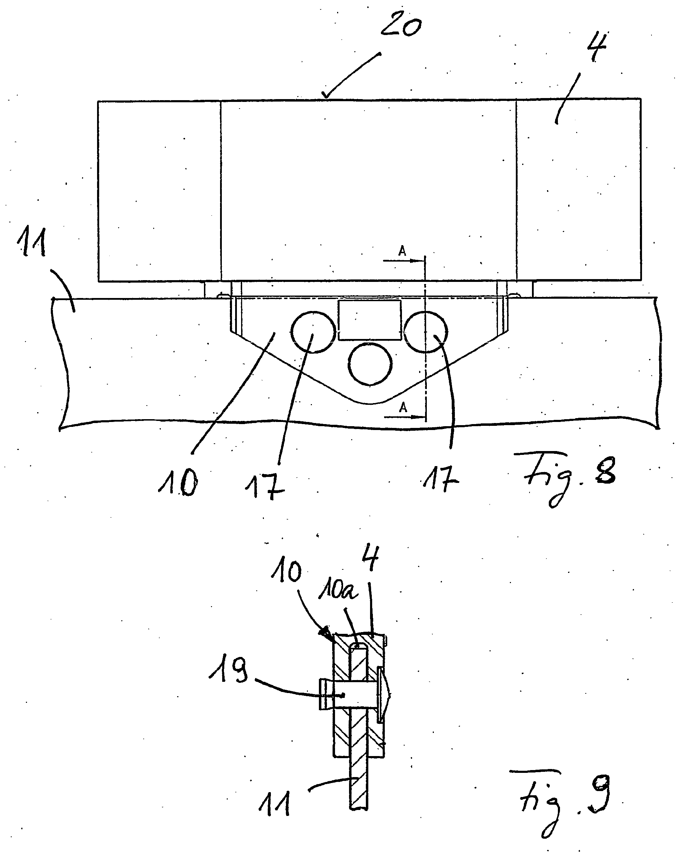

Eine genaue Ausrichtung bzw. Positionierung der Magnetpole 4 zum Magnetrückenkasten 8 wird gemäß Fig. 4 bis 9 mit Hilfe von ersten, an den Magnetpolen 4 bzw. deren Polwangen 10 ausgebildeten, ersten Positionierungsmitteln 17 und diesen zugeordneten, an den oberen Rändern der Wände 11 vorgesehenen, zweiten Positionierungsmitteln 18 erreicht. Im Ausführungsbeispiel bestehen die ersten Positionierungsmittel 17 aus in den Polwangen 10 ausgebildeten, ersten Löchern bzw. Bohrungen und die zweiten Positionierungsmittel 18 aus in den Wänden 11 ausgebildeten, zweiten Löchern bzw. Bohrungen, wie insbesondere Fig. 4 und 8 zeigen. Die Befestigung der Magnetpole 4 an den Wänden 11 in den durch die Positionierungsmittel 17, 18 vorgegebenen Positionen erfolgt vorzugsweise mit Hilfe von die ersten und zweiten Löcher 17 und 18 durchragenden Befestigungselementen 19 (Fig. 9) in Form von Nieten, Schrauben oder sonstigen geeigneten Befestigungsmitteln. Denkbar wäre es auch, in die Löcher 17, 18 lediglich der Positionierung dienende Passstifte einzusetzen und die Befestigung der Magnetpole 4 am Magnetrückenkasten 8 auf andere Weise zu bewirken.

Die Lage der Positionierungsmittel 17, 18 ist so gewählt, dass die Magnetpole 4 in ihren am Magnetrückenkasten 8 befestigten Zustand (Fig. 7) von oben her auf den vorher auf den Federn 14 abgestützten Polrücken 15 aufliegen. Diese werden daher im Einbauzustand (Fig. 7) fest gegen die Kerne 5 der Magnetpole 4 gedrückt, ohne dass weitere Maßnahmen erforderlich sind.

Bei bekannten Magnetanordnungen der beschriebenen Art grenzen von den Magnetpolen 4 definierte, in der Regel ebene Magnetpolflächen 20 (Fig. 6, 7) sämtlich an eine gemeinsame Referenzebene, die in einem fahrbereiten Zustand des Magnetschwebefahrzeugs einer ebenfalls ebenen Fläche gegenüberliegt, die z. B. an der Unterseite eines Langstators ausgebildet ist, der im Fahrweg des Magnetschwebefahrzeugs montiert und aus einzelnen Statorpaketen zusammengesetzt wird und Bestandteil eines den Antrieb des Magnetschwebefahrzeugs bewirkenden Langstator-Linearmotors ist. Soll der Schwebezustand des Magnetschwebefahrzeugs hergestellt werden, werden die Magnetpole 4 aktiviert, wodurch der Magnetrückenkasten 8 und über die Gestellbügel 3 (Fig. 1) das ganze Magnetschwebefahrzeug angehoben wird, bis zwischen der Referenzfläche und der Unterseite der Reaktionsschiene ein definierter Luftspalt hergestellt ist.

Die durch den Schwebezustand entstehende Streckenlast hat zur Folge, dass sich der Magnetrückenkasten 8 zwischen den Gestellbügeln 3 wie ein Biegebalken durchbiegt und dadurch auch die Referenzfläche längs einer Biegelinie gekrümmt wird, was zu den eingangs erläuterten Problemen führt.

Erfindungsgemäß wird daher vorgeschlagen, der Referenzfläche im unbelasteten Zustand, d. h. insbesondere bei stromlosen Magnetpolen 4, eine Krümmung zu geben, die im wesentlichen entgegengesetzt gleich bzw. invers zur Krümmung einer Fläche ist, die sich bei Nennlast ausbildet, wenn die Magnetpolflächen 20 im unbelasteten Zustand sämtlich in einer Ebene liegen. Dadurch wird erreicht, dass die sich unter Nennlast bzw. bei eingeschalteten Magnetpolen 4 ergebende Verbiegung des Rückenkastens 8 die im unbelastete Zustand vorhandene, vorgeformte Biegelinie im wesentlichen kompensiert und dadurch unter Nennlast zu einer im wesentlichen ebenen Referenzfläche und überall gleichen Spaltgrößen führt.

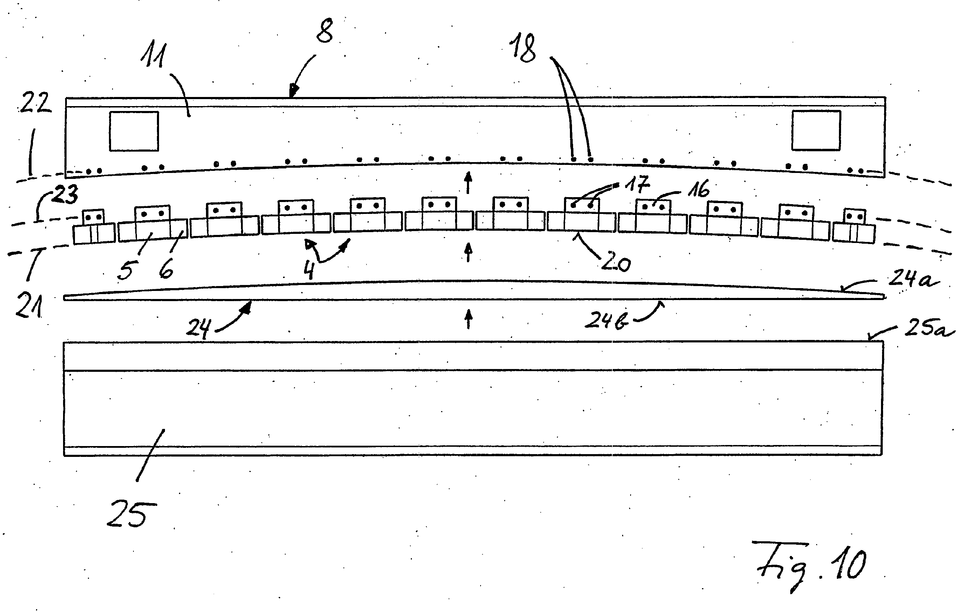

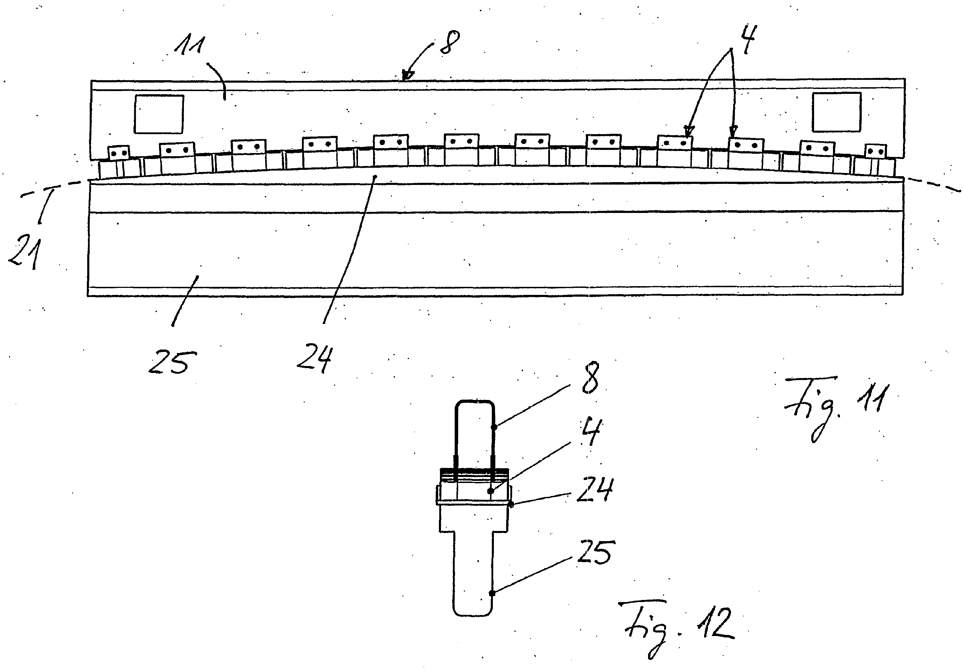

Der beschriebene, vorgebogene Zustand der Referenzfläche, die in Fig. 10 gestrichelt angedeutet und mit dem Bezugszeichen 21 gekennzeichnet ist, kann mit verschiedenen Mitteln herbeigeführt werden, z. B. durch entsprechende Lochmuster in den Polwangen 10 der Magnetpole 4. Da es aus fertigungstechnischen Gründen jedoch zweckmäßig ist, alle Magnetpole 4 und insbesondere die Lochmuster in den Polwangen 10 identisch auszubilden, wird erfindungsgemäß weiter vorgeschlagen, die inverse Biegelinie 21 in den Magnetrückenkästen 8 abzubilden. Das ist in Fig. 10 schematisch durch eine gestrichelt dargestellte, durch die Mittelachsen der zweiten Löcher 18 erstreckte Linie 22 angedeutet, wobei wie auch in Fig. 11 der Magnetrückenkasten 8 im Gegensatz zu Fig_{.} 6 und 7 oben und die Magnetanordnung mit den Magnetpolen 4 unten angeordnet ist. Haben die Löcher 17 in den Polwangen 16 sämtlich dieselbe Lage, dann hat das zur Folge, dass die Löcher 17 im Einbauzustand auf einer zur Linie 22 parallelen Linie 23 liegen, so dass die Magnetpolflächen 20 polygonzugartig an die Referenzfläche 21 grenzen, die eine den Linien 22, 23 entsprechende Krümmung besitzt.

Die Herstellung der Magnetrückenkästen 8 ist durch die Erfindung nicht wesentlich erschwert. Erfindungsgemäß können nicht nur alle Magnetpole 4, sondern auch alle Magnetrückenkästen 8 - in Fahrtrichtung des Magnetschwebefahrzeugs betrachtet - identisch ausgebildet werden, d. h. bei allen Magnetrückenkästen 8 kann das Muster der Löcher 18 bzw. die Linie 22, auf der sie liegen, gleich ausgebildet werden. Die Linie 22 muss daher lediglich einmal berechnet werden, worauf die Löcher 18 mit Hilfe von computergestützten Bohrern od. dgl. derart gebohrt werden können, dass sie auf der in Fig. 10 schematisch angedeuteten Linie 22 oder auf Parallelen dazu liegen.

Die Montage der Magnetanordnung am Magnetrückenkasten 8 könnte dadurch er- folgen, dass die Magnetpole 4 einzeln und nacheinander in der aus Fig. 4 bis 9 ersichtlichen Weise eingebaut werden. Erfindungsgemäß wird jedoch vorgeschlagen, die Montage mit Hilfe der aus Fig. 10 bis 12 ersichtlichen Vorrichtung vorzunehmen.

Wie insbesondere Fig. 10 zeigt, wird zur Montage der Magnetpole 4 eine Platte 24 verwendet, die eine Oberfläche 24a aufweist, die invers zu der normalerweise entstehenden Biegelinie des Rückenkasten 8 und damit genauso wie die Biegelinie 21 gekrümmt ist. Die Magnetpole 4 werden mit ihren Magnetpolflächen 20 längs dieser Oberfläche 24a angeordnet, wie insbesondere aus Fig. 11 ersichtlich ist. Die Krümmung der Oberfläche 24a kann dabei leicht so ausgebildet werden, dass diese einer als ideal empfundenen Biegelinie folgt. Anschließend werden die Platte 24 und der Magnetrückenkasten 8, der zuvor mit den längs der Biegelinie 22 verlaufenden Löcher 18 versehen wurde, aneinander angenähert, bis die ersten und zweiten Löcher 17, 18 paarweise aufeinander ausgerichtet sind. Da die Oberfläche 24a der Platte 24 dieselbe Krümmung wie die Biegelinie 21 hat, ist dadurch die Lage der Magnetpole 4 zum Magnetrückenkasten eindeutig festgelegt, so dass beide mit Hilfe von die Löcher 17, 18 durchragenden Befestigungsmitteln, z. B. Schrauben, fest miteinander verbunden werden können. Die Polrücken 15 (Fig. 6, 7) legen sich dabei mit Hilfe der Federn 14 jeweils federnd an die Unterseite der Kerne 5 der Magnetpole 4 an, so dass die Verbiegung der Referenzfläche 21 keine zusätzlichen Maßnahmen für diese Polrücken 15 erfordert.

Bei der Platte 24 kann es sich z. B. um eine aus Kunststoff bestehende, ursprünglich planparallele Platte handeln, deren Oberfläche 24a auf einer CNC-Maschine mit Hilfe eines Walzenfräsers hergestellt wird.

Sollten die ersten und zweiten Löcher 17, 18 aufgrund von Toleranzen in der aus Fig. 11 und 12 ersichtlichen Lage nicht exakt konzentrisch aufeinander ausgerichtet sein, werden z. B. Befestigungsmittel in Form von Schrauben od. dgl. mit so kleinen Durchmessern verwendet, dass sie auch durch die Löcher 17, 18 gesteckt werden können, wenn deren Achsen etwas versetzt zueinander angeordnet sind. Durch ausreichend starkes Festziehen der Schrauben od. dgl. werden die Polwangen 10 danach so fest gegen die Wand 11 gepresst, dass infolge der entstehenden Flächenpressung und Haftreibung keine Gefahr besteht, dass sich die Magnetpole 4 beim Betrieb des Magnetschwebefahrzeugs relativ zum Magnetrückenkasten 8 verschieben. Das gilt insbesondere dann, wenn die Schrauben od. dgl. mit üblichen Drehsicherungen versehen werden. Im übrigen ergibt sich der Vorteil, dass die Lage der Magnetpolflächen 20 bzw. die Lage der Magnetpole 4 relativ zum Magnetrückenkasten 8 in diesem Fall allein durch die Form der Oberfläche 24a der Platte 24 und nicht durch die Lage der Positionierungsmittel bzw. Löcher 17, 18 bestimmt wird. Dadurch können Fluchtungsfehler kompensiert werden, die durch unvermeidbare Toleranzen bei der Herstellung der Magnetrückenkästen 8 und der Magnetpole 4 entstehen und
z. B. bis zu 0,5 mm betragen können. Derartige Fluchtungsfehler können daher nicht mehr zu wesentlichen Abweichungen der Magnetpolflächen 20 von der Referenzfläche 21 führen.

Mit besonderem Vorteil und nach der derzeit für am besten gehaltenen Ausführungsform der Erfindung wird anstelle der beschriebenen, überwiegend kraftschlüssigen Verbindung eine kombinierte kraft- und formflüssige Verbindung zwischen den Magnetpolen 4 und den Magnetrückenkästen 8 vorgesehen. Hierzu werden z. B. Nieten 19 (Fig. 9) verwendet, die zwar einen kleineren Durchmesser als die ersten und/oder zweiten Löcher 17, 18 aufweisen, aber zusätzlich "lochleibungsfüllende" Eigenschaften haben. Darunter werden Nieten verstanden, die beim Zusammenpressen weich werden bzw. zu fließen beginnen und in etwa vorhandene Zwischenräume zwischen sich und den Lochleibungen eintreten und diese vollständig ausfüllen. Dadurch wird zusätzlich zur kraftschlüssigen Verbindung auch ein Formschluss erhalten. Hierbei ist es von Vorteil, wenn die Wände 11 in den Nuten 10a der Polwangen 10 (Fig. 9) oder umgekehrt die Polwangen 10 in Nuten der Wände 11 montiert werden, weil eine derartige "zweischnittige" Verbindung zu einer symmetrischen Belastung der Nieten 19 oder anderer Befestigungsmittel führt und keine Kippneigung besteht.

Fig. 10 zeigt schließlich eine bevorzugte Anwendung der Platte 24. Damit die Magnetpole 4 bei ihrer Annäherung an den Magnetrückenkasten 8 oder bei Annäherung des Magnetrückenkastens 8 an die Magnetpole 4 ihre definierte Lage auf der Oberfläche 24a beibehalten, wird die Platte 24 mit ihrer Unterseite 24b vorzugsweise auf ein Spannmittel 25 aufgelegt. Als Spannmittel 25 kann z. B. ein Spannmagnet dienen, der eine ebene Oberfläche 25a aufweist, in welchem Fall die Unterseite 24b der Platte 24 zweckmäßig ebenfalls eben ist, so dass die Platte 24 insgesamt eine im wesentlichen plankonvexe Form hat. Außerdem wird die Platte 24 in diesem Fall zweckmäßig aus einem unmagnetischen bzw. nicht ferromagnetischen Material hergestellt.

Das Spannmittel 25 erstreckt sich vorzugsweise über die ganze Länge der Platte 24 und des Magnetrückenkasten 8. Im Fall eines Spannmagneten können übliche, mit C-förmigen Kernen versehene Magnete verwendet werden, wie sie z. B. vom Werkzeugmaschinenbau her bekannt sind. Alternativ wäre es möglich, den Spannmagneten in derselben Weise mit in Längsrichtung abwechselnden Nord- und Südpolen zu versehen, wie dies auch für die herzustellende Magnetanordnung gilt. Abgesehen davon können aber auch hydraulische oder pneumatische Spannvorrichtungen verwendet werden. Weiter wäre es denkbar, die Magnetpole 4 einfach auf der konvexen Oberfläche 24a der Platte 24 durch Kleben zu befestigen oder durch Öffnungen in der Platte 24 hindurch mit Hilfe geeigneter Saugvorrichtungen an die Oberfläche 24a heranzuziehen.

Das im Einzelfall vorgesehene Spannmittel 25 muss lediglich dazu geeignet sein, die Magnetpole 4 in der gewünschten Lage zu halten, bis sie zusammen mit der Platte 24 am Magnetrückenkasten 8 anliegen (Fig. 11, 12) und die erforderliche Befestigung der Magnetpole 4 am Magnetrückenkasten 8 erfolgt ist.

Nach dem Festziehen der jeweiligen Befestigungsmittel wird die Platte 24 von den Magnetpolflächen 20 entfernt. Diese grenzen dann entsprechend der obigen Beschreibung an die Referenzfläche 21 (Fig. 10) an, deren Krümmung so gewählt ist, dass sie bei der späteren Anwendung der Magnetanordnung im Sinne der Fig. 1 unter Nennlast in entgegengesetzter Richtung gebogen und dadurch zu einer ebenen Fläche wird. Im übrigen hat die beschriebene Montageweise den Vorteil, dass die Positionierung der Magnetpole 4 praktisch nur durch die eng tolerierbare Platte 24 festgelegt wird, so dass Toleranzen im Magnetrückenkasten 8 und den Löchern 17, 18 keinen wesentlichen Einfluss auf die exakte Angrenzung der Magnetpolflächen 20 an die Referenzfläche 21 haben.

Die Erfindung ist nicht auf das beschriebene Ausführungsbeispiel beschränkt, das auf vielfache Weise abgewandelt werden könnte. Dies gilt insbesondere für die spezielle Ausbildung des Magnetrückenkastens 8, der z. B. nur eine Wand 11 aufweisen braucht, und die Mittel zur Verbindung der Magnetpole 4 mit dem Magnetrückenkasten 8. Weiter könnten anstelle der beschriebenen Positionierungs- und Befestigungsmittel auch andere Positionierungs- und Befestigungsmittel vorgesehen werden. Insbesondere können z. B. die an den beiden Enden der Magnetanordnung befmdlichen Magnetpole 4 mit einer geringeren Anzahl von ersten Positionierungsmitteln 17 versehen sein, da diese Endpole meistens nur halb so große Polflächen wie die übrigen Magnetpole 4 aufweisen. Entsprechend kann der Magnetrückenkasten 8 an den Enden weniger zweite Positionierungsmittel 18 aufweisen. Weiter ist klar, dass die anhand der Magnetanordnung 1 (Fig. 1) mit der Funktion "Tragen" beschriebenen Maßnahmen in entsprechender Abwandlung auch für die Magnetanordnung 2 mit der Funktion "Führen" angewendet werden könnten. Außerdem ist es möglich, die Platte 24 als Bestandteil des Spannmittels 25 auszubilden, indem z. B. die Oberfläche einer Polplatte eines Spannmagneten mit der gekrümmten Oberfläche 24a versehen wird. Schließlich versteht sich, dass die verschiedenen Merkmale auch in anderen als den beschriebenen und dargestellten Kombinationen angewendet werden können.

## Patentansprüche

1. Magnetanordnung für Magnetschwebefahrzeuge, enthaltend einen Magnetrückenkasten (8) und eine Mehrzahl von fest mit diesem verbundenen, hintereinander angeordneten Magnetpolen (4), die an eine gemeinsame Referenzfläche (21) grenzende Magnetpolflächen (20) aufweisen, **dadurch gekennzeichnet, dass** die Referenzfläche (21) in einem unbelasteten Zustand der Magnetpole (4) längs einer Biegelinie erstreckt ist, die invers zur Krümmung einer Fläche ausgebildet ist, die sich bei einer Nennlast der Magnetpole (4) ergeben würde, wenn die Magnetpolflächen (20) im unbelasteten Zustand in einer Ebene liegen.

2. Magnetanordnung nach Anspruch 1, **dadurch gekennzeichnet, dass** die Magnetpole (4) mit ersten Postionierungsmitteln (17) versehen sind und dass der Magnetrückenkasten (8) den ersten Positionierungsmitteln (17) zugeordnete, zweite Positionsierungsmittel (18) aufweist, die längs einer zur Biegelinie (21) parallelen Linie (22) angeordnet sind.

3. Magnetanordnung nach Anspruch 2, **dadurch gekennzeichnet, dass** die ersten und die zweiten Positionierungsmittel (17, 18) aus ersten und zweiten Löchern bestehen.

4. Magnetanordnung nach Anspruch 3, **dadurch gekennzeichnet, dass** die Befestigung der Magnetpole (4) am Magnetrückenkasten (8) mit die ersten und zweiten Löcher durchragenden Nieten (19) erfolgt.

5. Magnetanordnung nach Anspruch 4, **dadurch gekennzeichnet, dass** die Nieten (19) kleinere Querschnitte als die ersten und/oder zweiten Löcher haben und die Eigenschaft aufweisen, etwa verbleibende Zwischenräume zwischen ihnen und den Lochleibungen im Einbauzustand vollständig aufzufüllen.

6. Magnetanordnung nach einem der Ansprüche 3 bis 5, **dadurch gekennzeichnet, dass** der Magnetrückenkasten (8) einen Boden (8a) und wenigstens eine von diesem auf- ragende, mit den zweiten Positionierungsmitteln (18) versehene Wand (11) enthält und die Magnetpole (4) zumindest an von den Magnetpolflächen (20) abgewandten Unterseiten wenigstens je eine, die Wand (11) in sich aufnehmende, mit den ersten Positionierungsmitteln (17) versehene Polwange (10) aufweisen.

7. Verfahren zur Montage einer Magnetanordnung nach wenigstens einem der Ansprüche 2 bis 6, **dadurch gekennzeichnet, dass** eine Platte (24) verwendet wird, die eine entsprechend der Biegelinie (21) gekrümmte Oberfläche (24a) aufweist, die Magnetpole (4) mit ihren Magnetpolflächen (20) auf die gekrümmte Oberfläche (24a) der Platte (24) aufgelegt werden, die Wand (11) derart mit den zweiten Positionierungsmitteln (18) versehen wird, dass diese längs der zur Biegelinie (21) parallelen Linie (22) angeordnet sind, die Platte (24) und der Magnetrückenkasten (8) aufeinander zu bewegt werden, bis die ersten und zweiten Positionierungsmittel (17, 18) aufeinander ausgerichtet sind, die Magnetpole (4) dann fest mit der Wand (11) verbunden werden, und die Platte (24) danach von den Magnetpolen (4) entfernt wird.

8. Verfahren nach Anspruch 7, **dadurch gekennzeichnet, dass** die Platte (24) als Teil eines Spannmittels (25) ausgebildet wird.

9. Verfahren nach Anspruch 8, **dadurch gekennzeichnet, dass** die Platte (24) als separates Bauteil ausgebildet wird.

10. Verfahren nach Anspruch 9, **dadurch gekennzeichnet, dass** das Spannmittel (25) mit einer ebenen Oberfläche (25a) versehen wird, die Platte (24) auf einer von ihrer gekrümmten Oberfläche (24a) abgewandten Seite mit einer ebenen Oberfläche (24b) versehen und mit dieser auf die ebene Oberfläche (25a) des Spannmittels (25) aufgelegt wird und die Magnetpole (4) vor dem Heranführen an den Magnetrückenkasten (8) auf die gekrümmte Oberfläche (24a) der Platte (24) aufgelegt werden.

11. Verfahren nach einem der Ansprüche 8 bis 10, **dadurch gekennzeichnet, dass** als Spannmittel (25) ein Spannmagnet verwendet wird.

12. Verfahren nach Anspruch 11, **dadurch gekennzeichnet, dass** die Platte (24) aus einem nicht ferromagnetischen Material hergestellt wird.

13. Verfahren nach einem der Ansprüche 8 bis 10, **dadurch gekennzeichnet, dass** ein hydraulisches oder pneumatisches Spannmittel verwendet wird.

14. Verfahren nach einem der Ansprüche 7 bis 13, **dadurch gekennzeichnet, dass** zur Befestigung der Magnetpole (4) an der Wand (11) Nieten (19) verwendet werden, die erste und zweite Positionierungsmittel (17, 18) in Form von Löchern durchragen und die Lochleibungen füllende Eigenschaften haben.

## Claims

1. A magnet arrangement for magnetic levitation vehicles, containing a magnet back box (8) and a plurality of magnet poles (4) which are securely connected to the same, arranged behind one another and which have magnet pole surfaces (20) adjoining a common reference surface (21), **characterised in that** the reference surface (21) is extended along a bending line in an unloaded state of the magnet poles (4), which bending line is constructed inversely to the curvature of a surface which would result in the case of a nominal loading of the magnet poles (4), if the magnet pole surfaces (20) lie in one plane in the unloaded state.

2. The magnet arrangement according to Claim 1, **characterised in that** the magnet poles (4) are provided with first positioning means (17) and **in that** the magnet back box (8) has second positioning means (18) assigned to the first positioning means (17), which second positioning means are arranged along a line (22) parallel to the bending line (21).

3. The magnet arrangement according to Claim 2, **characterised in that** the first and the second positioning means (17, 18) consist of first and second holes.

4. The magnet arrangement according to Claim 3, **characterised in that** the fixing of the magnet poles (4) on the magnet back box (8) takes place using rivets (19) projecting through the first and second holes.

5. The magnet arrangement according to Claim 4, **characterised in that** the rivets (19) have smaller cross sections than the first and/or second holes and have the property of completely filling any intermediate spaces remaining between them and the hole embrasures in the installed state.

6. The magnet arrangement according to one of Claims 3 to 5, **characterised in that** the magnet back box (8) contains a base (8a) and at least one wall (11) projecting from the same and provided with the second positioning means (18) and the magnet poles (4) at least on undersides facing away from the magnetic pole surfaces (20) have in each case at least one pole face (10) provided with the first positioning means (17) and accommodating the wall (11) in itself.

7. A method for assembling a magnet arrangement according to at least one of Claims 2 to 6, **characterised in that** a plate (24) is used, which has a surface (24a) curved in accordance with the bending line (21), the magnet pole surfaces (20) of the magnet poles (4) are laid onto the curved surface (24a) of the plate (24), the wall (11) is provided with the second positioning means (18) in such a manner that the same are arranged along the line (22) parallel to the bending line (21), the plate (24) and the magnet back box (8) are moved towards one another until the first and second positioning means (17, 18), are aligned with respect to one another, the magnet poles (4) are then securely connected to the wall (11), and the plate (24) is thereafter removed from the magnet poles (4).

8. The method according to Claim 7, **characterised in that** the plate (24) is constructed as part of a clamping means (25).

9. The method according to Claim 8, **characterised in that** the plate (24) is constructed as a separate component.

10. The method according to Claim 9, **characterised in that** the clamping means (25) is provided with a planar surface (25a), the plate (24) is provided with a planar surface (24b) on a side facing away from the curved surface (24a) thereof and is laid by means of the planar surface onto the planar surface (25a) of the clamping means (25) and the magnet poles (4) are laid onto the curved surface (24a) of the plate (24) before advancing towards the magnet back box (8).

11. The method according to one of Claims 8 to 10, **characterised in that** a clamping magnet is used as clamping means (25).

12. The method according to Claim 11, **characterised in that** the plate (24) is produced from a non-ferromagnetic material.

13. The method according to one of Claims 8 to 10, **characterised in that** a hydraulic or pneumatic clamping means is used.

14. The method according to one of Claims 7 to 13, **characterised in that** rivets (19) are used for fixing the magnet poles (4) on the wall (11), the first and second positioning means (17, 18) project through in the form of holes and the hole embrasures have filling properties.

## Revendications

1. Système magnétique pour véhicules à sustentation magnétique, comprenant un caisson arrière magnétique (8) et une pluralité de pôles magnétiques (4) raccordés de manière fixe à celui-ci et disposés les uns derrière les autres, lesquels présentent des surfaces de pôles magnétiques (20) jouxtant une surface de référence (21) commune, **caractérisé en ce que**, lorsque les pôles magnétiques (4) ne sont pas sollicités, la surface de référence (21) s'étend le long d'une courbe de flexion élastique, laquelle est formée de manière inverse à la courbure d'une surface qui serait obtenue avec une charge nominale des pôles magnétiques (4), lorsque les surfaces de pôles magnétiques (4) se trouvent dans un plan à l'état non sollicité.

2. Système magnétique selon la revendication 1, **caractérisé en ce que** les pôles magnétiques (4) sont munis de premiers moyens de positionnement (17) et **en ce que** le caisson arrière magnétique (8) présente des deuxièmes moyens de positionnement (18) associés aux premiers moyens de positionnement (17), lesquels sont disposés le long d'une ligne parallèle (22) à la courbe de flexion élastique (21).

3. Système magnétique selon la revendication 2, **caractérisé en ce que** les premiers et deuxièmes moyens de positionnement (17, 18) se composent de premiers et deuxièmes trous.

4. Système magnétique selon la revendication 3, **caractérisé en ce que** la fixation des pôles magnétiques (4) sur le caisson arrière magnétique (8) s'effectue avec des rivets (19) traversant les premiers et deuxièmes trous.

5. Système magnétique selon la revendication 4, **caractérisé en ce que** les rivets (19) possèdent des sections transversales plus petites que les premiers et/ou deuxièmes trous et présentent la propriété consistant à complètement remplir des espaces intermédiaires subsistants le cas échéant entre eux et les parois de trous à l'état assemblé.

6. Système magnétique selon l'une des revendications 3 à 5, **caractérisé en ce que** le caisson arrière magnétique (8) contient un fond (8a) et au moins une paroi (11) s'érigeant à partir de celui-ci et munie des deuxièmes moyens de positionnement (18), et **en ce que** les pôles magnétiques (4) présentent, au moins sur des dessous tournant le dos aux surfaces de pôles magnétiques (20), respectivement au moins une joue de pôle (10) accueillant la paroi (11) en elle et munie des premiers moyens de positionnement (17).

7. Procédé pour le montage d'un système magnétique selon l'une au moins des revendications 2 à 6, **caractérisé en ce que** l'on utilise une plaque (24), laquelle présente une surface courbe (24a) de manière correspondante à la courbe de flexion élastique (21), les pôles magnétiques (4) étant posés avec leurs surfaces de pôles magnétiques (20) sur la surface courbe (24a) de la plaque (24), la paroi (11) étant garnie avec les deuxièmes moyens de positionnement (18) de manière à ce que ceux-ci soient disposés le long de la ligne parallèle (22) à la courbe de flexion élastique (21), la plaque (24) et le caisson arrière magnétique (8) étant rapprochés l'un de l'autre jusqu'à ce que les premiers et deuxièmes moyens de positionnement (17, 18) soient orientés les uns par rapport aux autres, les pôles magnétiques (4) étant ensuite raccordés de manière fixe avec la paroi (11), et la plaque (24) étant ensuite retirée des pôles magnétiques (4).

8. Procédé selon la revendication 7, **caractérisé en ce que** la plaque (24) est réalisée en tant que partie d'un moyen de serrage (25).

9. Procédé selon la revendication 8, **caractérisé en ce que** la plaque (24) est réalisée en tant qu'élément distinct.

10. Procédé selon la revendication 9, **caractérisé en ce que** le moyen de serrage (25) est muni d'une surface plane (25a), la plaque (24) étant garnie sur un côté tournant le dos à sa surface courbe (24a) d'une surface plane (24b) et étant posée avec celle-ci sur la surface plane (25a) du moyen de serrage (25) et les pôles magnétiques (4), avant le rapprochement du caisson arrière magnétique (8), étant posés sur la surface courbe (24a) de la plaque (24).

11. Procédé selon l'une des revendications 8 à 10, **caractérisé en ce que** l'on utilise un aimant de serrage en tant que moyen de serrage (25).

12. Procédé selon la revendication 11, **caractérisé en ce que** la plaque (24) est fabriquée avec un matériau non ferromagnétique.

13. Procédé selon l'une des revendications 8 à 10, **caractérisé en ce que** l'on utilise un moyen de serrage hydraulique ou pneumatique.

14. Procédé selon l'une des revendications 7 à 13, **caractérisé en ce que**, pour la fixation des pôles magnétiques (4) sur la paroi (11), on utilise des rivets (19) qui traversent des premiers et deuxièmes moyens de positionnement (17, 18) sous forme de trous et qui présentent des propriétés de remplissage des parois des trous.
